# EUROPEAN PATENT APPLICATION

(11) **EP 4 668 939 A1**
(43) Date of publication of application: **24.12.2025**
(21) Application number: 23921935.5
(22) Date of filing: 16.02.2023
(51) Int. Cl.: H04W 72/044

(54) **REFERENCE SIGNAL RESOURCE CONFIGURATION METHOD AND APPARATUS**

(71) Applicant: Fujitsu Limited, Kawasaki-shi, Kanagawa 211-8588 (JP)
(72) Inventor: ZHU, Jing, Beijing 100022 (CN); ZHANG, Lei, Beijing 100022 (CN)
(74) Representative: Haseltine Lake Kempner LLP
(86) International application number: PCT/CN2023/076645
(87) International publication number: WO 2024/168781

(57) **Abstract**

Embodiments of the present disclosure provide a method and an apparatus for configuring reference signal resource. The method includes: a terminal equipment receives a first resource configuration, the first resource configuration at least including a first parameter, the first parameter being used for configuring a first reference signal resource with M ports; the terminal equipment receives a second resource configuration and/or a channel state information report configuration; wherein the first resource configuration or the second resource configuration or the channel state information report configuration is at least further used for the terminal equipment to determine a second reference signal resource with N ports; where, N is less than M.

## Description

### TECHNICAL FIELD

Embodiments of the present disclosure relate to the technical field of communication.

### BACKGROUND

With the popularization of 5G in various industries and its application in more geographical regions, in order to handle more advanced services, very high data rates and denser networks are required, more antennas, greater bandwidths and more frequency bands are used, thereby energy consumption of a 5G device is getting greater and greater.

According to data statistics from operators, average energy consumption of a 5G base station is more than three times that of an LTE base station, and nearly 50% of the cost for deploying a 5G network by operators is electricity fee overhead. More importantly, even during periods when there is no service, the energy consumption cost of the 5G base station is still very high. Thus, network energy saving has important significance for enhancing sustainability of the environment, reducing impacts (for example reducing greenhouse gas emission) on the environment and saving operating costs, 5G network energy saving is an urgent problem to be solved.

In order to achieve network energy saving, Rel-18 initiated topics related to network energy saving to study various energy-saving technologies. In the discussion, network energy-saving technologies may be classified into types such as time-domain/frequency-domain/spatial-domain/energy-domain energy saving. Spatial-domain energy saving for example includes dynamical adjustment of the number of antennas, energy-domain energy saving for example includes dynamical adjustment of data transmission power, and time-domain energy saving for example includes introduction of a cell DTX/DRX technologies, and so on. Using various energy-saving technologies can save a large amount of energy for a network device and/or a terminal equipment.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

However, the inventor finds that some scenarios of wireless communication applications (such as an energy-saving mode) might have negative impacts. For example, when a network device dynamically adjusts the number of antennas or transmission power, it may cause a change in a corresponding channel, resulting in an inaccurate or untimely measurement result of Channel State Information (CSI) from a terminal equipment or an inaccurate or untimely CSI report result thereof, ultimately affecting the transmission performance. How to configure one or more reference signal resources accurately and timely for the terminal equipment, so as to accurately perform CSI measurement and report, is a key problem that needs to be solved currently.

For at least one of the above problems, the embodiments of the present disclosure provide a method and an apparatus for configuring reference signal resource.

According to one aspect of the embodiments of the present disclosure, a method for configuring reference signal resource is provided, including:
a terminal equipment receives a first resource configuration, the first resource configuration at least including a first parameter, the first parameter being used for configuring a first reference signal resource with M ports,
the terminal equipment receives a second resource configuration and/or a channel state information (CSI) report configuration;
wherein the first resource configuration or the second resource configuration or the channel state information (CSI) report configuration is at least further used for the terminal equipment to determine a second reference signal resource with N ports; where, N is less than M.

According to another aspect of the embodiments of the present disclosure, an apparatus for configuring reference signal resource is provided, including:
a receiving unit configured to receive a first resource configuration, the first resource configuration at least including a first parameter, the first parameter being used for configuring a first reference signal resource with M ports,
the receiving unit further receiving a second resource configuration and/or a channel state information (CSI) report configuration;
wherein the first resource configuration or the second resource configuration or the channel state information (CSI) report configuration is at least further used for the terminal equipment to determine a second reference signal resource with N ports; where, N is less than M.

According to a further of the embodiments of the present disclosure, a method for configuring reference signal resource is provided, including:
a network device transmits a first resource configuration, the first resource configuration at least including a first parameter, the first parameter being used for configuring a first reference signal resource with M ports,
the network device transmits a second resource configuration and/or a channel state information (CSI) report configuration;
wherein the first resource configuration or the second resource configuration or the channel state information (CSI) report configuration is at least further used for a terminal equipment to determine a second reference signal resource with N ports; where, N is less than M.

According to another aspect of the embodiments of the present disclosure, an apparatus for configuring reference signal resource is provided, including:
a transmitting unit configured to transmit a first resource configuration, the first resource configuration at least including a first parameter, the first parameter being used for configuring a first reference signal resource with M ports,
the transmitting unit further transmitting a second resource configuration and/or a channel state information (CSI) report configuration;
wherein the first resource configuration or the second resource configuration or the channel state information (CSI) report configuration is at least further used for a terminal equipment to determine a second reference signal resource with N ports; where, N is less than M.

According to a further aspect of the embodiments of the present disclosure, a communication system is provided, including:
a network device configured to transmit a first resource configuration, the first resource configuration at least including a first parameter, the first parameter being used for configuring a first reference signal resource with M ports, and transmit a second resource configuration and/or a channel state information (CSI) report configuration; and
a terminal equipment configured to receive the first resource configuration, the second resource configuration and/or a channel state information (CSI) report configuration; wherein the first resource configuration or the second resource configuration or the channel state information (CSI) report configuration is at least further used for the terminal equipment to determine a second reference signal resource with N ports; where, N is less than M.

One of advantageous effects of the embodiments of the present disclosure includes that a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of a communication system in the embodiments of the present disclosure;
FIG. 2 is a schematic diagram of a CDM pattern in the embodiments of the present disclosure;
FIG. 3 is a schematic diagram of port multiplexing in the embodiments of the present disclosure;
FIG. 4 is another schematic diagram of port multiplexing in the embodiments of the present disclosure;
FIG. 5 is an example diagram of resource adjustment in the embodiments of the present disclosure;
FIG. 6 is a schematic diagram of a method for configuring reference signal resource in the embodiments of the present disclosure;
FIG. 7 is an example diagram of a first reference signal resource and a second reference signal resource in the embodiments of the present disclosure;
FIG. 8 is an example diagram of a first resource configuration in the embodiments of the present disclosure;
FIG. 9 is an exemplary diagram of a CSI report configuration in embodiments of the present disclosure;
FIG. 10 is an example diagram of a second resource configuration in the embodiments of the present disclosure;
FIG. 11 is another schematic diagram of a method for configuring reference signal resource in the embodiments of the present disclosure;
FIG. 12 is a schematic diagram of an apparatus for configuring reference signal resource in the embodiments of the present disclosure;
FIG. 13 is another schematic diagram of an apparatus for configuring reference signal resource in the embodiments of the present disclosure;
FIG. 14 is a schematic diagram of a network device in the embodiments of the present disclosure;
FIG. 15 is a schematic diagram of a terminal equipment in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and 5G, New Radio (NR), future 6G and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipments as described above. If it is not specifically mentioned herein, "a device" may refer to a network device, or may refer to a terminal equipment.

Scenarios of the embodiments of the present disclosure are described through the following examples, however the present disclosure is not limited to these.

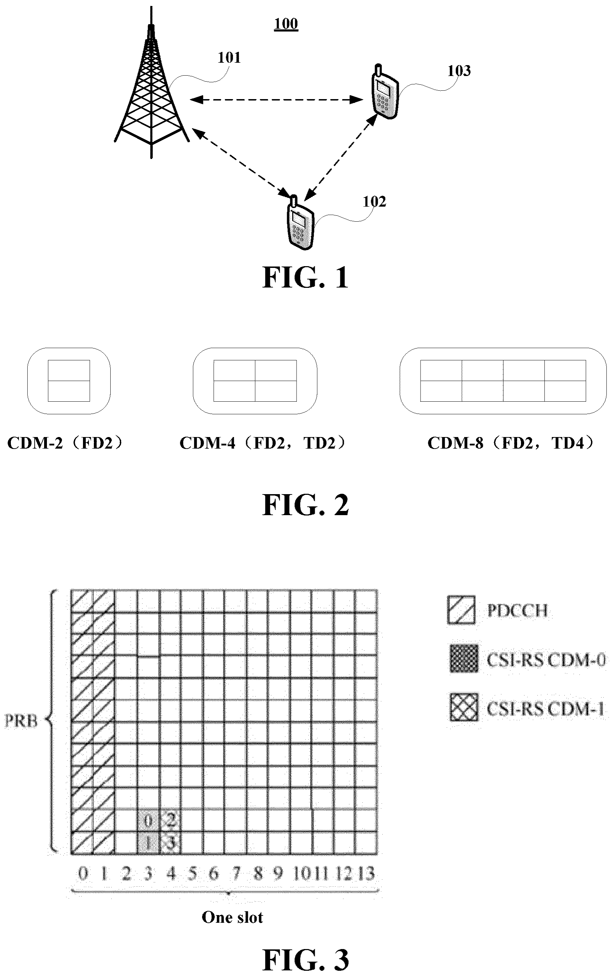

FIG. 1 is a schematic diagram of a communication system in the embodiments of the present disclosure, schematically describes situations by taking a terminal equipment and a network device as examples, as shown in FIG. 1, a communication system 100 may include a network device 101 and terminal equipments 102, 103. For simplicity, FIG. 1 only takes two terminal equipments and one network device as examples for description, however the embodiments of the present disclosure are not limited to this.

In the embodiments of the present disclosure, transmission of existing or further implementable services may be carried out between the network device 101 and the terminal equipments 102, 103. For example, these services may include but be not limited to: enhanced Mobile Broadband (eMBB), massive Machine Type Communication (mMTC), Ultra-Reliable and Low-Latency Communication (URLLC) and so on.

It is worth noting that FIG. 1 shows that two terminal equipments 102 and 103 are within the coverage of network device 101, but the present disclosure is not limited to this. The two terminal equipments 102 and 103 may be outside the coverage of the network device 101, or one terminal equipment 102 may be within the coverage of the network device 101 and the other terminal equipment 103 may be outside the coverage of the network device 101.

In the embodiments of the present disclosure, higher layer signaling may be e.g. radio resource control (RRC) signaling; for example, is called an RRC message, for example includes an MIB, system information, and a dedicated RRC message; or is called an RRC information element (RRC IE). The higher layer signaling, for example, may further be Medium Access Control (MAC) signaling; or called a MAC control element (MAC CE). However, the present disclosure is not limited to this.

In a mobile communication system, generally a terminal equipment performs CSI (channel state information) measurement according to indication and configuration of a network device, and then reports CSI obtained by measurement to the network device. When the network device schedules the terminal equipment, it may refer to this CSI so as to adopt an appropriate transmission mode on an appropriate physical resource to schedule the terminal equipment to perform transmission. Different terminal equipments may experience different physical channel conditions. Adopting a CSI feedback mechanism may rationally and effectively utilize physical resources, thereby improving the efficiency of entire network transmission.

In the CSI feedback mechanism of NR, the terminal equipment mainly measures a reference signal from the network device based on CSI configuration and performs reporting, the reference signal includes a channel state information reference signal (CSI-RS), and a synchronization signal block (SSB), etc. The CSI configuration of NR mainly includes: a resource configuration for CSI measurement configured by the network device for the terminal equipment (which may be called a CSI-RS resource configuration), and a report configuration of how the terminal equipment performs reporting configured by the network device (which may be called a CSI report configuration).For example, the CSI-RS resource configuration mainly configures: time-frequency-spatial resources of CSI-RS resources, and necessary parameters for generating an RS sequence. In short, the terminal equipment is capable of accurately knowing an RS sequence transmitted by the network device and a specific time-frequency-spatial resource position of the sequence according to the CSI-RS resource configuration, so as to receive the sequence at a corresponding position and perform signal processing on a received sequence by taking a locally generated sequence as a reference to accurately estimate a channel. For how to specifically generate the RS sequence, relevant techniques may be referred to, detailed description is not provided here. Embodiments of the present disclosure will describe the CSI-RS resource configuration.

For a time-frequency position of each CSI-RS resource, the network device determines it via the following parameters in *CSI-RS-ResourceMapping,* as shown in Table 1 below.

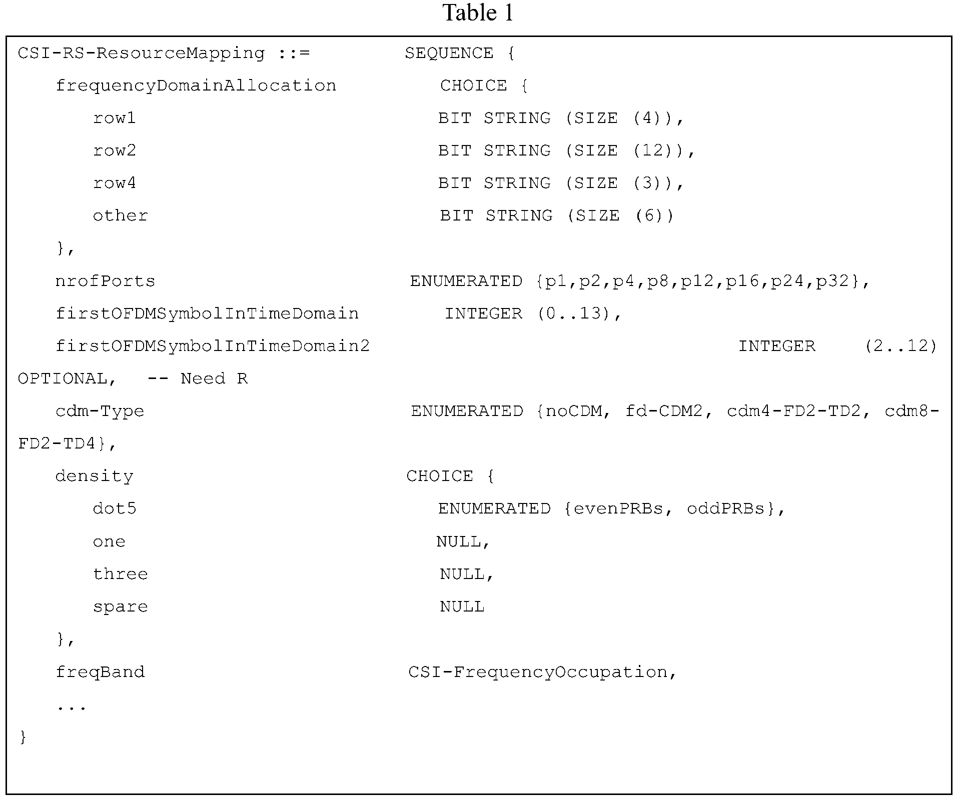

As shown in Table 1*, firstOFDMSymbolInTimeDomain* and *firstOFDMSymbolInTime Domain2* are used to determine positions of a CSI-RS resource in a time domain, NR currently support occupation of 1, 2 or 4 Orthogonal Frequency Division Multiplexing (OFDM) symbols. Parameter *frequencyDomainAllocation* is used to determine a position of the CSI-RS resource in a frequency domain. Parameter *nrofPorts* is used to determine the number of CSI-RS ports, NR currently supports configurations of 1, 2, 4, 8, 12, 16, 24 and 32 ports. Parameter *cdm-Type* is used to determine a type of Code Division Multiplexing (CDM) of the CSI-RS resource, NR currently supports three patterns i.e., CDM-2, CDM-4 and CDM-8.

FIG. 2 is a schematic diagram of a CDM pattern in the embodiments of the present disclosure. By taking CDM-4 as an example, this pattern includes 4 ports, each port occupies all resource elements (REs) in the pattern, and different orthogonal cover codes are adopted to distinguish between ports.

REs occupied by a CDM pattern constitute a CDM group, and each CDM group contains 2, 4 or 8 ports. In this way, a plurality of ports of a CSI-RS may be distributed into a plurality of CDM groups with the same pattern, that is, port distribution of the CSI-RS may be determined through CDM group aggregation.

NR supports multiple flexible aggregation schemes, and for the same port number configuration, supports multiple CDM aggregation schemes. NR flexibly supports a CSI-RS with 2 to 32 ports by using CDM group aggregation of three CDM patterns i.e., CDM-2, CDM-4 and CDM-8. For a multi-port CSI-RS resource, multiple multiplexing modes may be adopted between different ports.

FIG. 3 is a schematic diagram of port multiplexing in the embodiments of the present disclosure. As shown in FIG. 3, a CDM + TDM mode is used, a 4-port CSI-RS resource is aggregated using the CDM-2 pattern, divided into 2 CDM groups, each CSI-RS port in the CDM group is mapped onto 2 REs in this pattern, and orthogonal multiplexing is achieved between ports based on an orthogonal cover code (OCC) with a length being 2. Ports between CDM groups (such as ports 0, 1 and 2, 3) achieve orthogonality via TDM.

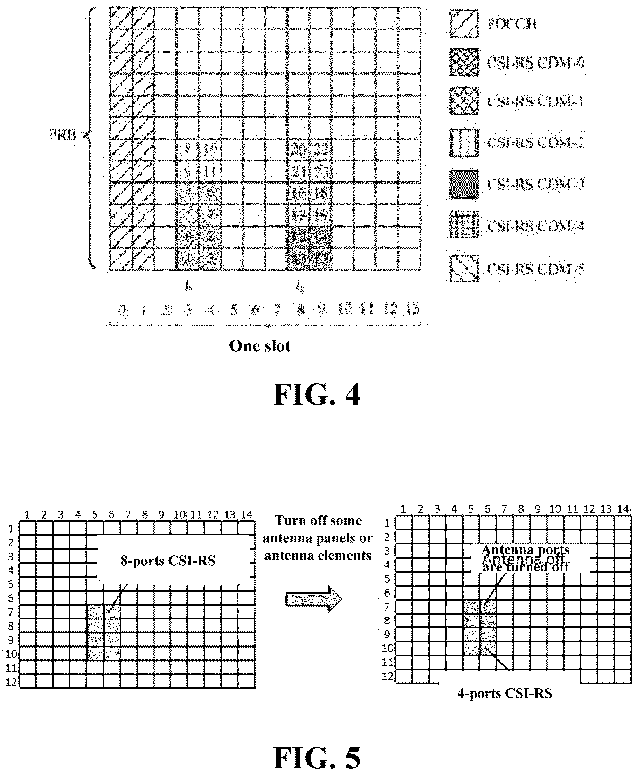

FIG. 4 is another schematic diagram of port multiplexing in the embodiments of the present disclosure. As shown in FIG. 4, a CDM + FDM + TDM mode is used, a 24-port CSI-RS resource is aggregated using the CDM-4 pattern, divided into 6 CDM groups. Orthogonal multiplexing is achieved between CSI-RS ports in each CDM group via an OCC with a length being 4. Orthogonal multiplexing is achieved between different CDM groups via TDM or FDM.

At present, the CSI-RS resource configuration is semi-statically configured via Radio Resource Control (RRC) signaling and generally does not change over a relatively long period of time. If these resources need to be changed, adjustment made be made via RRC reconfiguration. However, in some scenarios (such as energy-saving mode) of wireless communication applications, transmission power or the number of antennas, etc. may be adjusted, thus these resources may be changed.

FIG. 5 is an example diagram of resource adjustment in the embodiments of the present disclosure. For example, a network device initially configures an 8-port CSI-RS for channel measurement, etc. for a terminal equipment. Subsequently, the network device readjusts antenna configuration, for example, turning off some antenna panels or turning off some antenna elements, etc. After adjustment, the network device uses a 4-port CSI-RS to serve the terminal equipment. Due to a change in the antenna configuration, channels experienced by the 8-port CSI-RS before change and the 4-port CSI-RS after change are different.

This adjustment may be relatively static or may be relatively dynamic. In comparison, a relatively dynamic adjustment can achieve a better power-saving effect. This relatively dynamic adjustment may be of a slot level (taking a 15kHz subcarrier interval as an example, 1 slot is 1ms), or may be of a symbol level (taking the 15kHz subcarrier interval as an example, 1 symbol is approximately 71.4us).

When the network device dynamically adjusts a configuration (such as a CSI-RS port), a channel may undergo a sudden change (an equivalent channel response at a receiver side before and after adjustment is discontinuous). In this situation, if an existing CSI measurement and report mechanism is adopted, the terminal equipment is unable to know that a sudden change has occurred to perform accurate measurement and report. That is to say, the terminal equipment is unable to accurately implement CSI measurement and report; correspondingly, there is no accurate channel state information for scheduling decision at the network device side.

On the other hand, even if the network device performs relatively static configuration, the existing resource configuration for CSI-RS is a dedicated configuration for the terminal equipment. If an existing configuration mechanism is adopted, the network device may need to configure all the terminal equipments it serves one by one after each adjustment. Considering the overhead of RRC configuration, this may lead to excessive signaling overhead, thereby affecting the network transmission efficiency and reducing a data transmission rate.

Therefore, how the network device configures a reference signal resource accurately and timely, so that the terminal equipment can efficiently and accurately perform CSI measurement even in a case of resource adjustment (for example, for the purpose of energy saving), has become a problem that needs to be solved.

In the embodiments of the present disclosure, by taking the reference signal being a CSI-RS as an example, the reference signal resource may also be called CSI-RS resource, and the resource configuration may also be called CSI-RS resource configuration; the present disclosure is not limited to this. Furthermore, the embodiments of the present disclosure are described by taking energy saving as an example, but are not limited to this, and may be applied to any scenario involving CQI calculation or CSI measurement.

### Embodiments of a first aspect

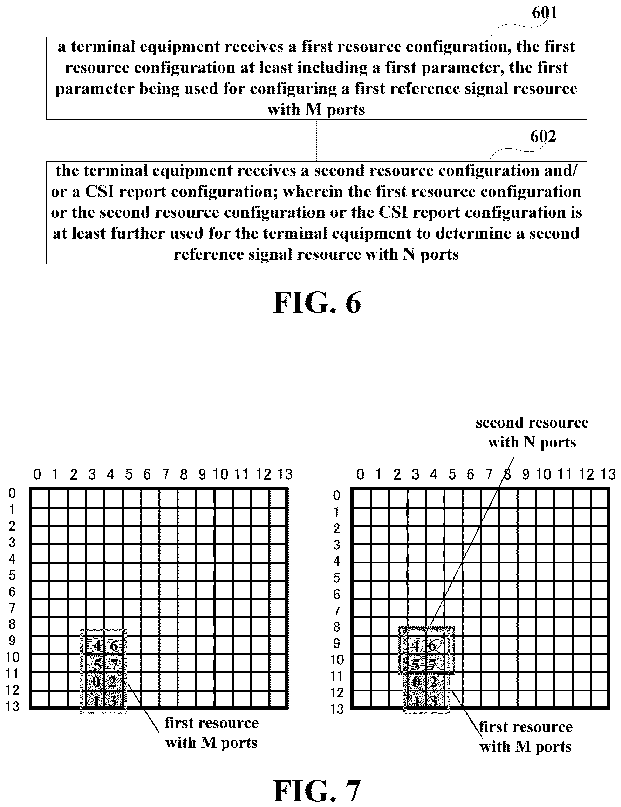

Embodiments of the present disclosure provide a method for configuring reference signal resource, which is described from a terminal equipment side. FIG. 6 is a schematic diagram of a method for configuring reference signal resource in the embodiments of the present disclosure. As shown in FIG. 6, the method includes:
601, a terminal equipment receives a first resource configuration, the first resource configuration at least including a first parameter, the first parameter being used for configuring a first reference signal resource with M ports; and
602, the terminal equipment receives a second resource configuration and/or a channel state information (CSI) report configuration; wherein the first resource configuration or the second resource configuration or the channel state information (CSI) report configuration is at least further used for the terminal equipment to determine a second reference signal resource with N ports; where, N is less than M.

It should be noted that the above FIG. 6 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 6.

For example, at least two of the first resource configuration, the second resource configuration and the CSI report configuration may be carried by the same RRC signaling, or may be carried by different pieces of RRC signaling respectively. For another example, the first resource configuration, the second resource configuration and the CSI report configuration may be different configurations or may be included in the same configuration. Embodiments of the present disclosure do not impose limitations in this regard.

In the embodiments of the present disclosure, a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

In some embodiments, the first reference signal resource with the M ports and the second reference signal resource with the N ports are NZP CSI-RS resources for channel measurement. The first reference signal resource with the M ports and the second reference signal resource with the N ports may be periodic or may be semi-persistent.

For example, one of feasible solutions for network energy saving is to dynamically adjust a port. Reference signal resource of a port that needs to be dynamically adjusted is a channel measurement based non-zero power CSI-RS resource. Moreover, for CSI-RS resources based on TRS measurement (corresponding to a higher-layer parameter trs_info) and beam management (corresponding to a higher-layer parameter repetition that configured as on or off), since the number of ports is relatively small, a port adjustment operation is not required.

In some embodiments, the first reference signal resource and/or the second reference signal resource are at least time-domain resources and/or frequency-domain resources and/or spatial-domain resources for transmitting or receiving reference signals.

In some embodiments, the second reference signal resource with the N ports is a part of the first reference signal resource with the M ports.

For example, the second reference signal resource with the N ports is time-domain resource and/or frequency-domain resource and/or spatial-domain resource corresponding to some ports of the first reference signal resource with the M ports. In a network energy-saving scenario, a terminal equipment may be configured with more than one CSI-RS resource in a channel measurement resource set in the CSI report configuration (CSI-ReportConfig). The second reference signal resource with the N ports correspond to a spatial element/port muting mode, or a spatial element/port configuration.

In some embodiments, a first parameter for configuring the first reference signal resource with the M ports at least includes one of the following parameters: the number M (nrofPort) of ports, a parameter for determining a position of a time-domain resource, or a parameter for determining a position of a frequency-domain resource.

For example, the parameter for determining a position of a time-domain resource is time-domain position information (firstOFDMSymbolInTimeDomain) of a first OFDM symbol included in the first reference signal resource, and the parameter for determining a position of a frequency-domain resource is frequency-domain allocation information (frequencyDomainAllocation) of the first reference signal resource.

In some embodiments, the terminal equipment determines the first reference signal resource with the M ports based on a first resource configuration, a value of M is determined by the parameter *nrofPort,* and the first reference signal resource with the M ports represent time-frequency-spatial resources corresponding to all ports in the first resource configuration. The second reference signal resource with the N ports may be determined via the first reference signal resource with the M ports.

FIG. 7 is an example diagram of a first reference signal resource and a second reference signal resource in the embodiments of the present disclosure. For example, ports 0 to 3 and ports 4 to 7 in a 8-port first reference signal resource correspond to different antenna panels and are respectively powered independently. When a base station turns off power switches corresponding to ports 0 to 3, circuits corresponding to ports 4 to 7 still operate normally, a 4-port second resource after an antenna is turned off is a time-frequency-spatial resource corresponding to ports 4 to 7 of the 8-port first reference signal resource before the antenna is turned off. Therefore, the terminal equipment may determine the second reference signal resource with the N ports via time-frequency-spatial resources corresponding to some ports of the first reference signal resource with the M ports.

The following text then describes how to determine the second reference signal resource with the N ports.

In some embodiments, the terminal equipment determines the first reference signal resource with the M ports according to the first parameter; and the terminal equipment determines the second reference signal resource with the N ports according to the first parameter and a second parameter, wherein the second parameter is included in the first resource configuration and/or the CSI report configuration.

In some embodiments, the second parameter is included in the first resource configuration. For example, it may be included in Resource Setting (such as CSI-ResourceMapping), or in ResourceSet (such as nzp-CSI-ResourceSet), or in Resource (such as nzp-CSI-Resource), or in CSI-RS-ResourceMapping.

In some embodiments, at least one second reference signal resource may be determined according to the first resource configuration. The second parameter is used to indicate that N ports in the M ports of the first reference signal resource are the second reference signal resource; or the second parameter indicates or enables the resources corresponding to some ports in the first reference signal resource with the M ports as the second reference signal resource with the N ports.

Table 2 is an example of the first resource configuration.

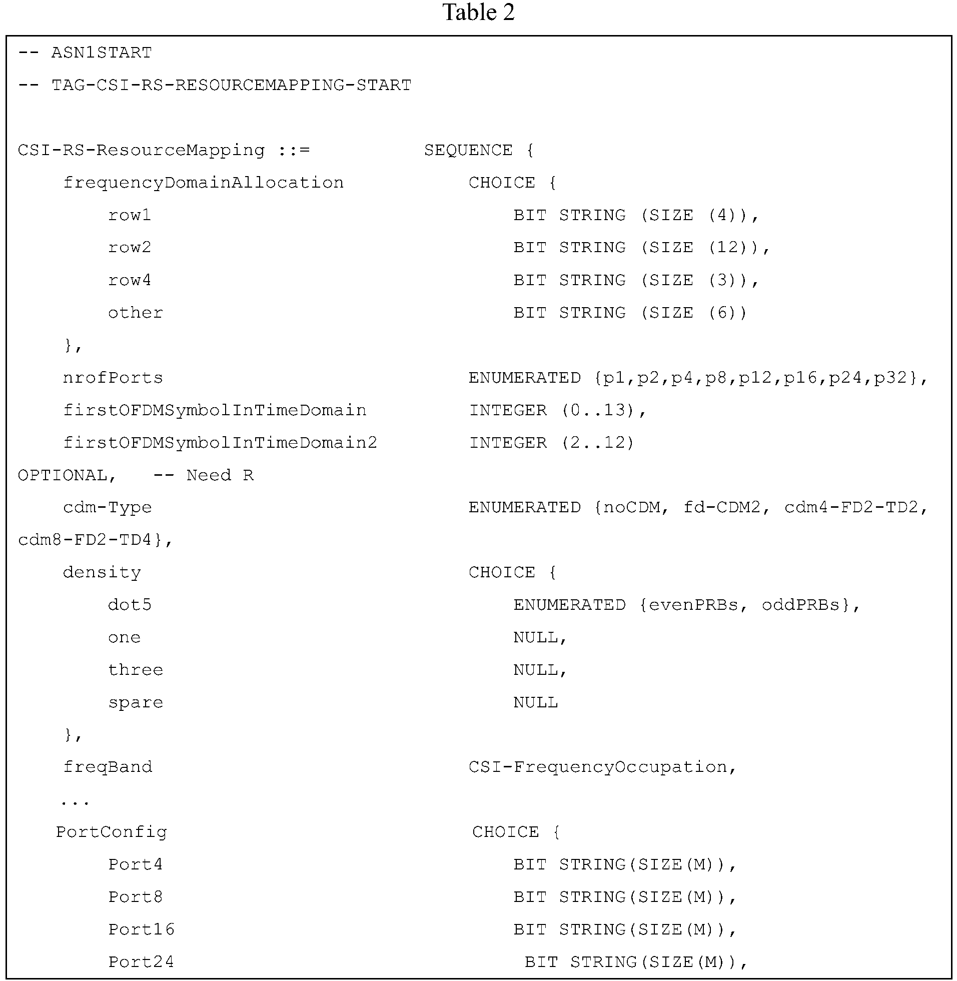

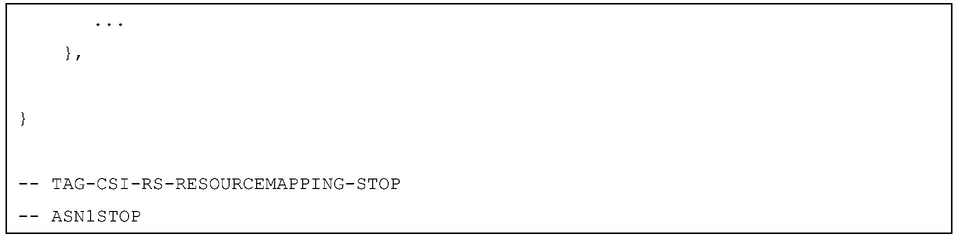

As shown in Table 2, the second parameter may be named PortConfig and is included in CSI-RS-ResourceMapping. Currently, nrofPorts is configured as p8, indicating M = 8, PortConfig is configured as Port4 11110000, indicating the first four ports of 8 ports, i.e., the second resource with N ports are time-frequency resources corresponding to the first four ports.

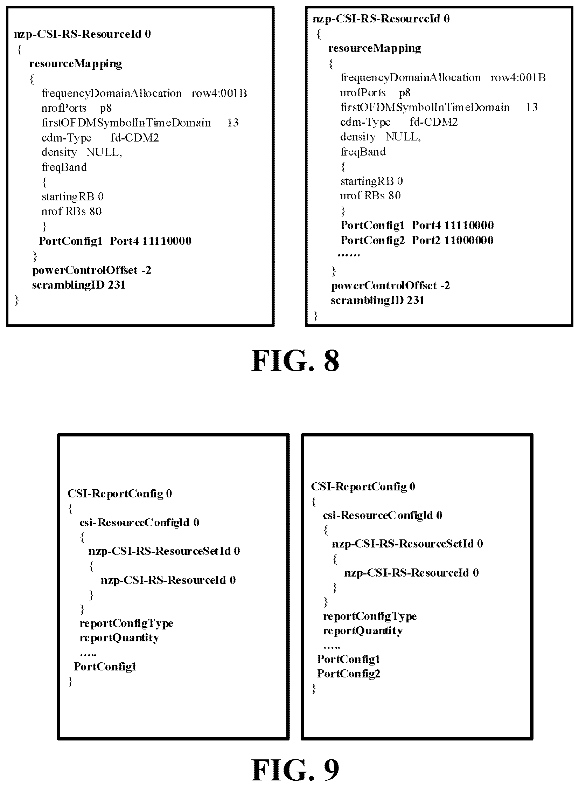

FIG. 8 is an example diagram of a first resource configuration in the embodiments of the present disclosure. As shown on the left side of FIG. 8, the terminal equipment determines a second reference signal resource based on PortConfig1, such as a second resource with N ports. As shown on the right side of FIG. 8, the terminal equipment may determine two second reference signal resources based on PortConfig1 and PortConfig2, such as denoted as a second resource with L ports and a second resource with S ports, L and S are less than M.

For example, on the left side of FIG. 8, PortConfig1 corresponds to a second resource, PortConfig is configured as Port4 11110000, indicating the first four ports of 8 ports, i.e., the second resource with N ports are time-frequency resources corresponding to the first four ports.

For another example, on the right side of FIG. 8, PortConfig1 and PortConfig2 correspond to two second resources, PortConfig1 is configured as Port4 11110000, indicating the first four ports of 8 ports, i.e., the second resource with L ports are time-frequency resources corresponding to the first four ports. PortConfig2 is configured as Port2 11000000, indicating that the first two ports of 8 ports, i.e., the second resource with S ports are time-frequency resources corresponding to the first two ports.

In some embodiments, the second parameter is included in the CSI report configuration, i.e., included in CSI-ReportConfig.

Table 3 is an example of the CSI report configuration.

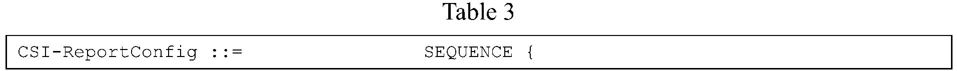

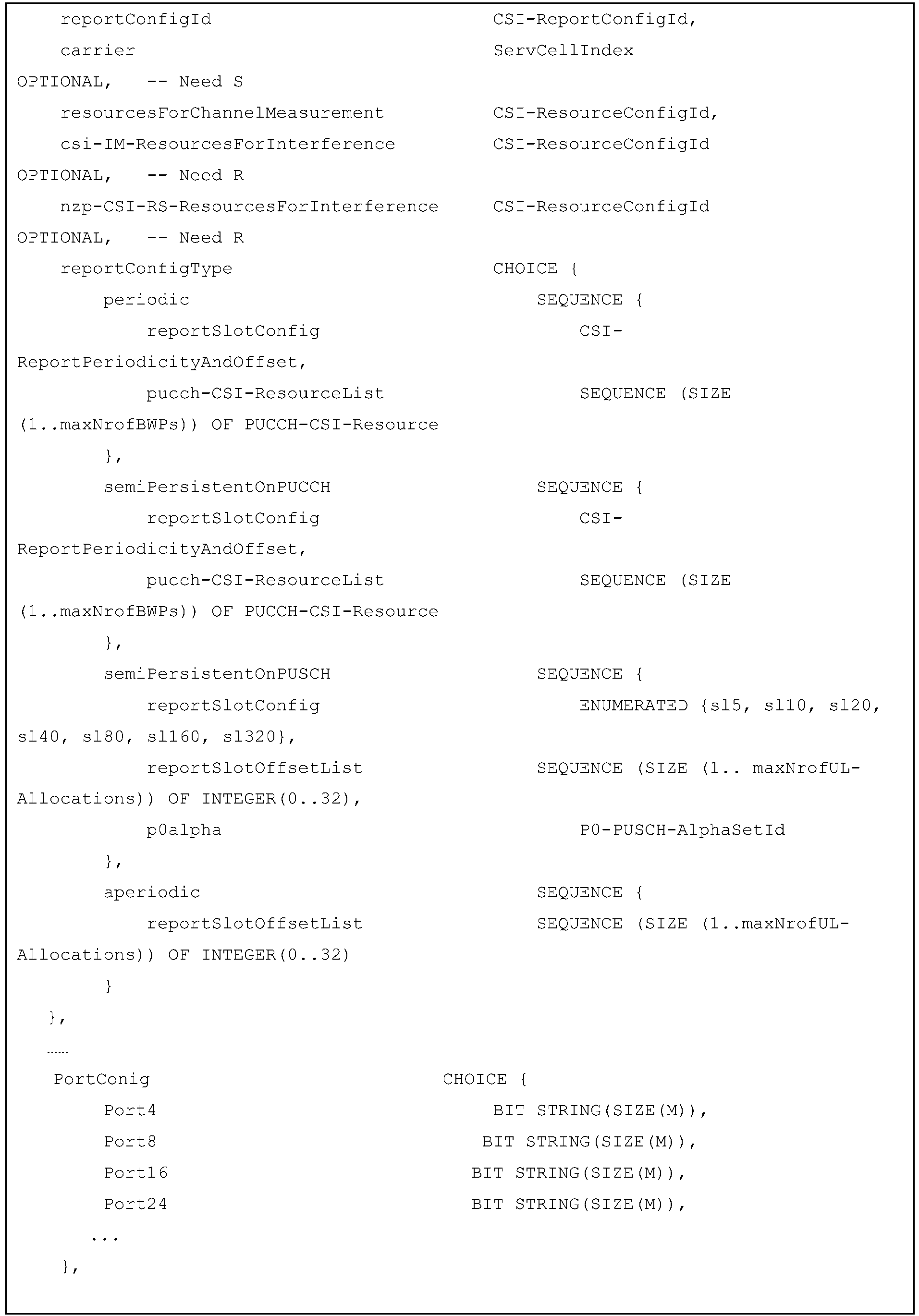

As shown in Table 3, the second parameter may be named PortConfig and is included in CSI-Report Config. Currently, nrofPorts is configured as p8, indicating M = 8, PortConfig is configured as Port4 11110000, indicating the first four ports of 8 ports, i.e., the second resource with N ports are time-frequency resources corresponding to the first four ports.

FIG. 9 is an exemplary diagram of a CSI report configuration in embodiments of the present disclosure. As shown on the left side of FIG. 9, the terminal equipment determines a second reference signal resource based on PortConfig1 in CSI-ReportConfig0, such as a second resource with N ports. As shown on the right side of FIG. 8, the terminal equipment may determine two second reference signal resources based on PortConfig 1 and PortConfig2 in CSI-ReportConfig0, such as denoted as a second resource with L ports and a second resource with S ports, L and S are less than M.

The following is a schematic description of a method for indicating a second parameter.

In some embodiments, the second parameter is X bits, the X bits being used to represent N continuous or discontinuous ports in the M ports. The X bit for example is indicated by adopting a bitmap mode.

In some embodiments, X is equal to M, and the second parameter is M bits, one of the M bits corresponds to a port in the M ports, and the bit indicates whether time-frequency resources of a corresponding port belong to the second reference signal resource with the N ports.

For example, each bit information in a bitmap is used to indicate a port. The terminal equipment receives M-bit information, wherein the mth bit being 1 indicates that it is one of N ports, the mth bit being 0 indicates that it is not one of the N ports, m is less than or equal to M and greater than or equal to 1. It may also be that the mth bit being 0 indicates that it is one of N ports, the mth bit being 1 indicates that it is not one of the N ports, m is less than or equal to M and greater than or equal to 1. The present disclosure is not limited to this.

For another example, the terminal equipment receives a first resource configuration with 8 ports. The terminal equipment further receives 8-bits information to determine second resource with 4 ports. Each bit represents a port, and the mth bit being 1 indicates that it is one of the 4 ports. FIG. 8 and FIG. 9 provide exemplary descriptions in this way.

In some embodiments, X is less than M, and the first reference signal resource with the M ports include X port groups; the second parameter is X bits, one of the X bits corresponds to one of the X port groups, and the bit indicates whether time-frequency resources of a corresponding port group belong to the second reference signal resource with the N ports. For example, the port group is a CDM group, or is a predefined or preconfigured port group.

For example, each bit information in a bitmap is used to indicate a port group. M ports are divided into X groups, and each port group contains M/X ports. The terminal equipment receives X-bit information, each bit representing a port group.

In one example, a port group may correspond to a CDM group, where X is the number of CDM groups, and M/X is a size (1, 2, 4, 8) of the CDM group. For example, the terminal equipment receives the first resource configuration with 8 ports, in which a CDM type is CDM-4, that is, each CDM group contains 4 ports. The terminal equipment further receives 2-bits information to determine the second resource with 4 ports, each bit representing a CDM group.

In another example, division of port groups may be obtained via RRC signaling. For instance, the terminal equipment receives the first resource configuration with 32 ports and simultaneously receives RRC signaling to determine port group division information. Ports 0 to 15 are port group 1, and ports 16 to 32 are port group 2. The terminal equipment receives 2-bits information to determine the second resource with 16 ports, each bit representing a port group.

Thereby, an indication mode via X bits is relatively flexible, continuous or discontinuous ports may be configured, which improves flexibility of port configuration for a network device.

In some embodiments, a list with a length being L is predefined or preconfigured, each row in the list denotes a value of the N ports in the M ports, and the X bits are used to indicate an index of the list; where, X=log2 (L).

For example, a list may be predefined, an index of the list may be indicated via X bits.

In some embodiments, the second parameter is an SLIV (Start and Length Indicator) parameter, the SLIV parameter being used to represent continuous N ports in the M ports.

For example, the second parameter is used to represent a starting port index and a port length of the continuous N ports. For example, it indicates {starting port index, number of ports/length}.

For another example, the second parameter is used to represent a starting port group index and a port group length of the continuous N ports. The port group is a CDM group, or is a predefined or preconfigured port group. For example, it indicates {a start CDM group index, the number of/a length of CDM groups} . This configuration mode has lower signaling overhead and can save signaling overhead.

In some embodiments, the second parameter is a value, the value indicating that a part of resources in the first reference signal resource with the M ports are the second reference signal resource with the N ports.

For example, an enumeration mode may be adopted. When M=8 and N=4, a value of the second parameter e.g. may be taken in two cases, {11110000, 00001111}, representing ports 0 to 3 and ports 4 to 7 of 8 ports respectively. This configuration mode has lower signaling overhead and can save signaling overhead.

In some embodiments, the second parameter is a numerical value or a proportional value, the numerical value or the proportional value indicating that a part of resources in the first reference signal resource with the M ports are the second reference signal resource with the N ports.

For example, if the second parameter is equal to 2 or 1/2, it means N = M/2. For another example, if the second parameter is equal to 4 or 1/4, it represents N = M/4. For a further example, if the second parameter is equal to 8, it means N = M/8. Specifically, which ports in the M ports are N ports may be determined via a pre-defined rule mode.

For another example, the second parameter may be used for enabling, such as EsEnable. When a network device configures this parameter, it indicates that the second resource with the N ports are resources corresponding to some ports in the current first resources with M ports. Specifically, which ports in the M ports are N ports may be determined via a pre-defined rule or a pre-configuration (RRC configuration) mode.

In some embodiments, the terminal equipment determines the first reference signal resource with the M ports according to the first parameter; the terminal equipment determines the second reference signal resource with the N ports according to the first parameter and a third parameter, wherein the third parameter is included in the second resource configuration.

For example, the third parameter includes CSI-RS resource configuration index information including the aforementioned second parameter and/or reference resources.

In some embodiments, the terminal equipment determines the first reference signal resource with the M ports according to the first parameter; the terminal equipment determines the second reference signal resource with the N ports according to the first parameter and a fourth parameter, the fourth parameter being included in the second resource configuration.

For example, the fourth parameter is used to indicate a time-frequency position of the second reference signal resource with the N ports, and at least includes: a parameter for determining a time-domain position of a first OFDM symbol (firstOFDMSymbolInTimeDomain), a parameter for determining a time-domain position of a second OFDM symbol (secondOFDMSymbolInTimeDomain), a parameter for determining a position of a frequency-domain resource (frequencyDomainAllocation).

The following text then schematically describes determining the second reference signal resource with N ports based on the second resource configuration.

For example, the second resource configuration takes the first resource configuration as a reference. The second resource configuration may only contain information for determining the second reference signal resource with N ports. Other information identical to that of the first resource configuration (such as time-domain characteristics, QCL characteristics, etc.) is not repeatedly listed in the second resource configuration.

For example, the second resource configuration only contains index information and/or time-frequency position configuration information (CSI-ResourceMapping) of a reference resource configuration. Other time-domain characteristics, and QCL characteristics, etc., are not contained in the second resource configuration. Therefore, the terminal equipment may receive the first resource configuration and the second resource configuration, determine a time-frequency position, the number of ports and other information of the second reference signal resource with N ports based on the second resource configuration, and determine other information such as time-domain characteristics and QCL characteristics of the second reference signal resource with N ports based on the first resource configuration. The terminal equipment may receive one or more second resource configurations to determine one or more second reference signal resources. For example, the terminal equipment receives a second reference signal resource configuration to determine second resource with N ports. For another example, the terminal equipment receives two second reference signal resource configurations to determine second resource with L ports and second resource with S ports respectively, both of these second resource configurations take the first resource configuration as a reference.

Table 4 is an example of the second resource configuration.

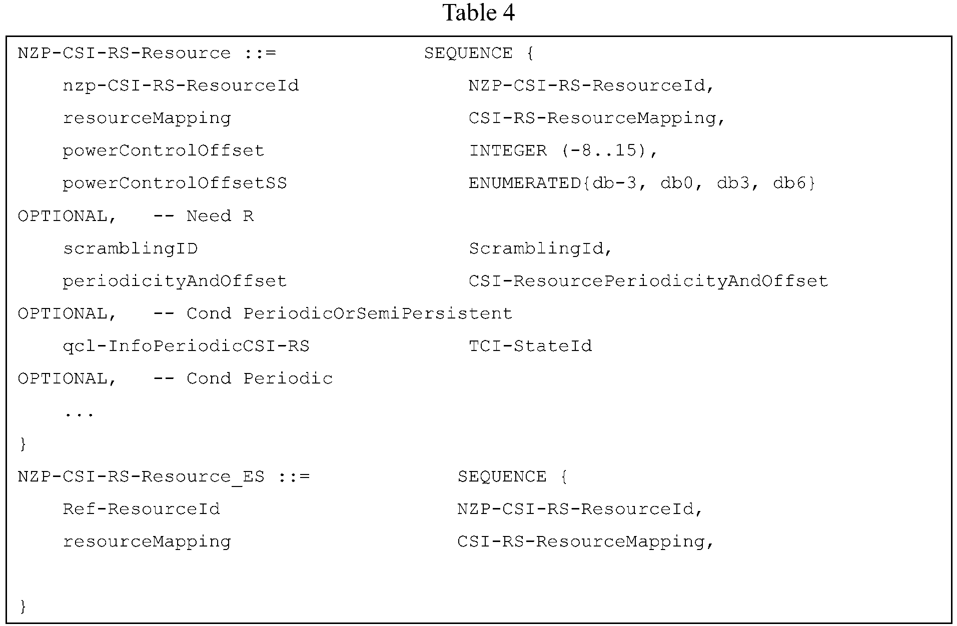

As shown in Table 4, the second resource configuration may be named NZP-CSI-RS-Reousrce_ES, by taking NZP-CSI-RS-Resource as a reference, NZP-CSI-RS-Reousrce_ES may only contain Ref-ResourceId and resourceMapping, resourceMapping being used to indicate time-frequency characteristics of the second resource with N ports.

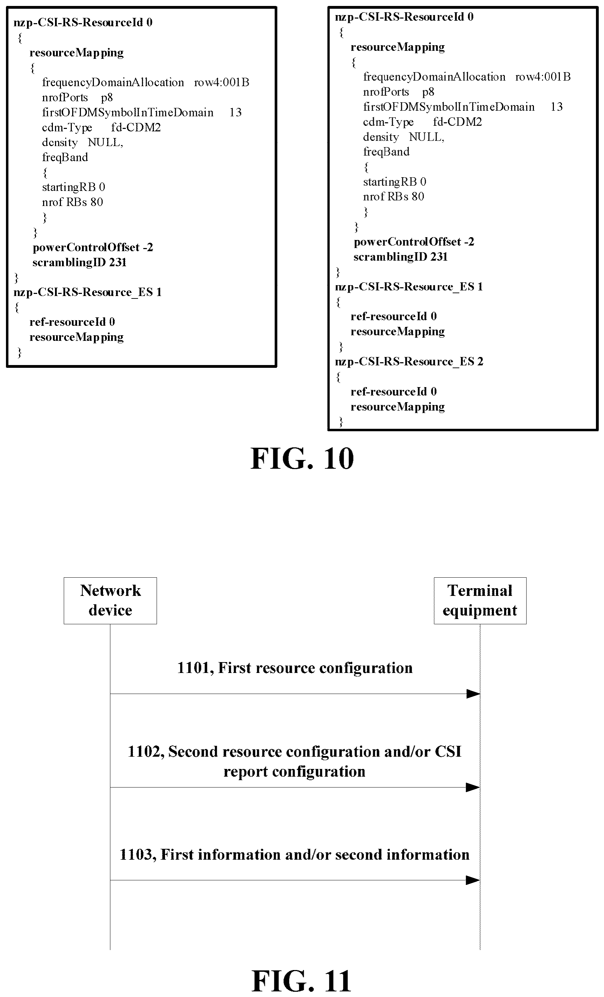

FIG. 10 is an example diagram of a second resource configuration in the embodiments of the present disclosure. As shown on the left side of FIG. 10, the terminal equipment determines a second reference signal resource based on nzp-CSI-RS-Resource_ES 1, such as a second resource with N ports. As shown on the right side of FIG. 10, the terminal equipment may determine two second reference signal resources based on nzp-CSI-RS-Resource_ES 1 and nzp-CSI-RS-Resource_ES 2, such as denoted as a second resource with L ports and a second resource with S ports, L and S are less than M.

In some embodiments, the first resource configuration, the second resource configuration or the channel state information (CSI) report configuration is carried by radio resource control (RRC) signaling and/or a media access control (MAC) control element (CE).

In some embodiments, the second reference signal resources of the N ports may be configured via UE-specific signaling, or may be configured via cell-specific or group-specific signaling. The signaling, for example, may be RRC, an MAC CE or DCI, etc.

By taking the second parameter mentioned above as an example, for example, the second parameter may indicate the second reference signal resource with the N ports by numerical or proportional or enabling means. The second parameter may be transmitted simultaneously to multiple terminal equipments via a group-based RRC signaling, that is, the signaling is cell-specific or group UEs-specific. For example, the second parameter is used to represent a numerical value, proportion or enable, without specifically indicating the number of ports. Second parameter values of multiple terminal equipments are totally the same and may be transmitted to multiple terminal equipments via a group signaling.

The above has been described by taking the second parameter as an example, but the present disclosure is not limited to this. For example, the group signaling may include any one or any combination of the first to fourth parameters, the first information to the fourth information mentioned above, or may further include parameters for selecting a pre-defined scheme, and so on. Via cell-specific signaling or group-specific signaling, the network device may configure multiple terminal equipments at once, thus signaling overhead may be saved.

The above text schematically describes how to perform resource configuration. The following text then schematically describes how to acknowledge or trigger.

In some embodiments, the terminal equipment determines the first reference signal resource with the M ports and the second reference signal resources based on RRC configuration, and determines that the CSI measurement resource is a first resource with the M ports and a second resource with the N ports. The terminal equipment may measure two resources simultaneously, which means that the terminal equipment configures corresponding resources for different ports of the same resource to perform measurement. The different port configurations correspond to different spatial-domain element muting modes or spatial-domain element configurations.

In some embodiments, the terminal equipment receives first information and/or second information, and determines use of the first reference signal resource with the M ports and/or the second reference signal resource with the N ports to perform channel state information (CSI) measurement according to the first information and/or the second information.

For example, the first information is carried via downlink control information (DCI) and/or a media access control (MAC) control element (CE), the first information may be a group common signal for transmitting information to a plurality of terminal equipments simultaneously; the second information is carried via radio resource control (RRC) signaling and/or a media access control (MAC) control element (CE).

Thereby, the terminal equipment may determine, for example based on DCI, that the CSI measurement resource is a first resource with the M ports, or is a second resource with the N ports, or both a first resource with the M ports and a second resource with the N ports. After configuring the first reference signal resources and the second reference signal resources via e.g. RRC, and then acknowledging, indicating or triggering via e.g. DCI, the network device is able to further dynamically indicate the terminal equipment to perform CSI measurement, and the CSI measurement can be more efficient and accurate.

In some embodiments, the first information is used to indicate at least one of the following: a network state, that a terminal equipment performs channel state information (CSI) measurement, that the terminal equipment performs channel state information (CSI) measurement by using the first reference signal resource with the M ports, that the terminal equipment performs channel state information (CSI) measurement by using the second reference signal resource with the N ports, update/adjustment/switching of a CSI-RS resource configuration, update/adjustment/switching of a CSI report configuration, CSI-RS port adjustment, CSI-RS port activation/deactivation indication, CSI-RS port enable indication, CSI measurement adjustment, an indication related to discontinuous reception, or an indication related to discontinuous transmission.

In some embodiments, the second information is used to indicate at least one of the following: a timer/counter related to a network state, a discontinuous reception period configuration related to the network state, or a discontinuous transmission period configuration related to the network state.

In some embodiments, the network state indicates at least one of the following: a first mode, a second mode, switching from the first mode to the second mode, switching from the second mode to the first mode, time-domain element adjustment, spatial-domain element adjustment, or energy-domain element adjustment.

For example, the first mode is at least one of the following: an energy-saving mode, a power-saving mode, a dormant mode, an abnormal mode, an inactive mode, a mode after a network device adjusts CSI-RS ports, or a first way of configuring CSI-RS ports; and the second mode is at least one of the following: a non-energy-saving mode, a non-power-saving mode, a non-dormant mode, a normal mode, an active mode, a mode before a network device adjusts CSI-RS ports, or a second way of configuring CSI-RS ports.

For another example, the spatial-domain element indicates at least one of the following: an antenna port, a logical port, a reference signal port, an antenna factor, an antenna element, or an antenna unit. The energy-domain element indicates at least one of the following: energy per resource element of a physical downlink shared channel (PDSCH), or energy per resource element of a channel state information reference signal.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

### Embodiments of a second aspect

Embodiments of the present disclosure provide a method for configuring reference signal resource, which is described from a network device side, the contents same as the embodiments of the first aspect are not repeated.

FIG. 11 is a schematic diagram of a method for configuring reference signal resource in the embodiments of the present disclosure. As shown in FIG. 11, the method includes:
1101, a network device transmits a first resource configuration, the first resource configuration at least including a first parameter, the first parameter being used for configuring a first reference signal resource with M ports; and
1102, the network device transmits a second resource configuration and/or a channel state information (CSI) report configuration; wherein the first resource configuration or the second resource configuration or the channel state information (CSI) report configuration is at least further used for the terminal equipment to determine a second reference signal resource with N ports; where, N is less than M.

It should be noted that the above FIG. 11 only schematically describes the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 11.

In some embodiments, the first reference signal resource and/or the second reference signal resource are at least time-domain resources and/or frequency-domain resources and/or spatial-domain resources for transmitting or receiving reference signals, and the second reference signal resource with the N ports are a part of the first reference signal resource with the M ports.

In some embodiments, as shown in FIG. 11, the method may further include:
1103, the network device transmits first information and/or second information;
wherein the first information and/or the second information is/are used by the terminal equipment to determine the first reference signal resource with the M ports and/or the second reference signal resource with the N ports.

In some embodiments, the first information is carried by downlink control information (DCI) and/or a media access control (MAC) control element (CE); and the second information is carried by radio resource control (RRC) signaling and/or a media access control (MAC) control element (CE).

In some embodiments, the first information is used to indicate at least one of the following: a network state, that a terminal equipment performs channel state information (CSI) measurement, that the terminal equipment performs channel state information (CSI) measurement by using the first reference signal resource with the M ports, that the terminal equipment performs channel state information (CSI) measurement by using the second reference signal resource with the N ports, update/adjustment/switching of a CSI-RS resource configuration, update/adjustment/switching of a CSI report configuration, CSI-RS port adjustment, CSI-RS port activation/deactivation indication, CSI-RS port enable indication, CSI measurement adjustment, an indication related to discontinuous reception, or an indication related to discontinuous transmission.

In some embodiments, the second information is used to indicate at least one of the following: a timer/counter related to a network state, a discontinuous reception period configuration related to the network state, or a discontinuous transmission period configuration related to the network state.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

As may be known from the above embodiments, a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

### Embodiments of a third aspect

Embodiments of the present disclosure provide an apparatus for configuring reference signal resource. The apparatus for example may be a terminal equipment, or may be one or more parts or components configured in the terminal equipment, contents same as the embodiments of the first aspect are not repeated.

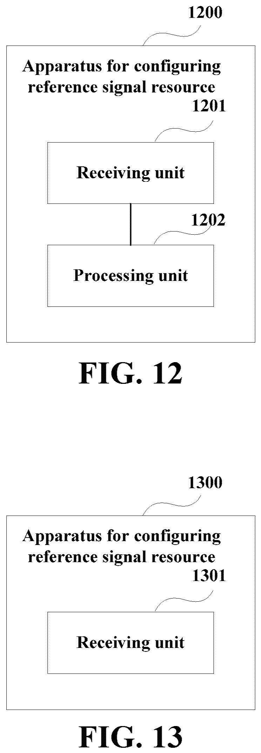

FIG. 12 is a schematic diagram of an apparatus for configuring reference signal resource in the embodiments of the present disclosure. As shown in FIG. 12, the apparatus 1200 for configuring reference signal resource includes:
a receiving unit 1201 configured to receive a first resource configuration, the first resource configuration at least including a first parameter, the first parameter being used for configuring a first reference signal resource with M ports,
the receiving unit 1201 further receiving a second resource configuration and/or a channel state information (CSI) report configuration;
wherein the first resource configuration or the second resource configuration or the channel state information (CSI) report configuration is at least further used for the terminal equipment to determine a second reference signal resource with N ports; where, N is less than M.

In some embodiments, the first reference signal resource and/or the second reference signal resource are at least time-domain resources and/or frequency-domain resources and/or spatial-domain resources for transmitting or receiving reference signals, and the second reference signal resource with the N ports are a part of the first reference signal resource with the M ports.

In some embodiments, the first parameter at least includes one of the following parameters: the number of ports, a parameter for determining positions of time-domain resources, or a parameter for determining positions of frequency-domain resources;
the parameter for determining positions of time-domain resources being time-domain position information of a first OFDM symbol contained in the first reference signal resource, and the parameter for determining positions of frequency-domain resources being frequency-domain allocation information of the first reference signal resource.

In some embodiments, as shown in FIG. 12, the apparatus further includes:
a processing unit 1202 configured to determine the first reference signal resource with the M ports according to the first parameter, and determine the second reference signal resource with the N ports according to the first parameter and the second parameter, wherein the second parameter is contained in the first resource configuration and/or the CSI report configuration.

In some embodiments, the second parameter is used to indicate that N ports in the M ports of the first reference signal resource are the second reference signal resource;
or, the second parameter indicates or enables resources to which a part of ports in the first reference signal resource with the M ports corresponds to be the second reference signal resource with the N ports.

In some embodiments, the second parameter is X bits, the X bits being used to represent N continuous or discontinuous ports in the M ports.

In some embodiments, X is equal to M, and the second parameter is M bits, one of the M bits corresponds to a port in the M ports, and the bit indicates whether time-frequency resources of a corresponding port belong to the second reference signal resource with the N ports.

In some embodiments, X is less than M, and the first reference signal resource with the M ports include X port groups; the second parameter is X bits, one of the X bits corresponds to one of the X port groups, and the bit indicates whether time-frequency resources of a corresponding port group belong to the second reference signal resource with the N ports; and the port group is a CDM group, or a predefined or preconfigured port group.

In some embodiments, a list with a length being L is predefined or preconfigured, each row in the list denotes a value of the N ports in the M ports, and the X bits are used to indicate an index of the list; where, X=log2 (L).

In some embodiments, the second parameter is an SLIV parameter, the SLIV parameter being used to represent continuous N ports in the M ports;
the second parameter is used to denote a starting port index and a port length of the continuous N ports, or the second parameter is used to denote a starting port group index and a port group length of the N continuous ports, the port group being a CDM group, or a predefined or preconfigured port group.

In some embodiments, the second parameter is a value, the value indicating that a part of resources in the first reference signal resource with the M ports are the second reference signal resource with the N ports.

In some embodiments, the second parameter is a numerical value or a proportional value, the numerical value or the proportional value indicating that a part of resources in the first reference signal resource with the M ports are the second reference signal resource with the N ports.

In some embodiments, a processing unit 1202 determines the first reference signal resource with the M ports according to the first parameter, and determines the second reference signal resource with the N ports according to the first parameter, a third parameter and/or a fourth parameter, wherein the third parameter and/or the fourth parameter is/are contained in the second resource configuration.

In some embodiments, the third parameter includes CSI-RS resource configuration index information including the second parameter and/or reference resources; and
the fourth parameter at least includes: a parameter for determining a time-domain position of a first OFDM symbol, a parameter for determining a time-domain position of a second OFDM symbol, and a parameter for determining a position of a frequency-domain resource.

In some embodiments, the first resource configuration, the second resource configuration or the channel state information (CSI) report configuration is carried by radio resource control (RRC) signaling and/or a media access control (MAC) control element (CE).

In some embodiments, the receiving unit 1201 further receives first information and/or second information, and determines use of the first reference signal resource with the M ports and/or the second reference signal resource with the N ports to perform channel state information (CSI) measurement according to the first information and/or the second information.

In some embodiments, the first information is carried by downlink control information (DCI) and/or a media access control (MAC) control element (CE), and the second information is carried by radio resource control (RRC) signaling and/or a media access control (MAC) control element (CE).

In some embodiments, the first information is used to indicate at least one of the following: a network state, that a terminal equipment performs channel state information (CSI) measurement, that the terminal equipment performs channel state information (CSI) measurement by using the first reference signal resource with the M ports, that the terminal equipment performs channel state information (CSI) measurement by using the second reference signal resource with the N ports, update/adjustment/switching of a CSI-RS resource configuration, update/adjustment/switching of a CSI report configuration, CSI-RS port adjustment, CSI-RS port activation/deactivation indication, CSI-RS port enable indication, CSI measurement adjustment, an indication related to discontinuous reception, or an indication related to discontinuous transmission.

In some embodiments, the second information is used to indicate at least one of the following: a timer/counter related to a network state, a discontinuous reception period configuration related to the network state, or a discontinuous transmission period configuration related to the network state.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 1200 for configuring reference signal resource may further include other components or modules. For detailed contents of these components or modules, relevant technologies may be referred to.

Moreover, for the sake of simplicity, FIG. 12 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

### Embodiments of a fourth aspect

Embodiments of the present disclosure provide an apparatus for configuring reference signal resource. The apparatus may be a network device, or may be one or more parts or components configured in the network device. The contents same as the embodiments of the first to third aspects are not repeated.

FIG. 13 is a schematic diagram of an apparatus for configuring reference signal resource in the embodiments of the present disclosure. As shown in FIG. 13, the apparatus 1300 for configuring reference signal resource includes:
a transmitting unit 1301 configured to transmit a first resource configuration, the first resource configuration at least including a first parameter, the first parameter being used for configuring a first reference signal resource with M ports,
the transmitting unit 1301 further transmitting a second resource configuration and/or a channel state information (CSI) report configuration; wherein the first resource configuration or the second resource configuration or the channel state information (CSI) report configuration is at least further used for a terminal equipment to determine a second reference signal resource with N ports; where, N is less than M.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

It's worth noting that the above only describes components or modules related to the present disclosure, but the present disclosure is not limited to this. The apparatus 1300 for configuring reference signal resource may further include other components or modules. For detailed contents of these components or modules, relevant technologies may be referred to.

Moreover, for the sake of simplicity, FIG. 13 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Through the embodiments of the present disclosure, a terminal equipment acquires a first reference signal resource with M ports and is capable of determining a second reference signal resource with N ports. Thereby, even in the case of resource adjustment (for example, for the purpose of energy saving), the terminal equipment is capable of performing CSI measurement efficiently and accurately, so as to provide accurate channel information for the scheduling of the network device.

### Embodiments of a fifth aspect

Embodiments of the present disclosure further provide a communication system, FIG.1 may be referred to, the contents same as the embodiments of the first to fourth aspects are not repeated.

In some embodiments, a communication system 100 at least may include:
a network device 101 configured to transmit a first resource configuration, the first resource configuration at least including a first parameter, the first parameter being used for configuring a first reference signal resource with M ports, and transmit a second resource configuration and/or a channel state information (CSI) report configuration; and
a terminal equipment 102 configured to receive the first resource configuration, the second resource configuration and/or a channel state information (CSI) report configuration; wherein the first resource configuration or the second resource configuration or the channel state information (CSI) report configuration is at least further used for the terminal equipment to determine a second reference signal resource with N ports; where, N is less than M.

Embodiments of the present disclosure further provide a network device, for example may be a base station, but the present disclosure is not limited to this, it may also be other network device.

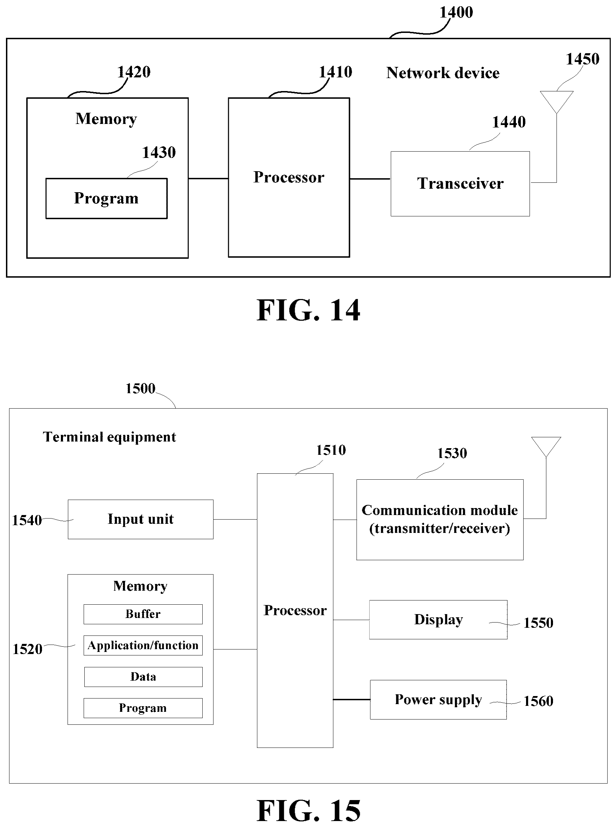

FIG. 14 is a composition schematic diagram of a network device in the embodiments of the present disclosure. As shown in FIG. 14, the network device 1400 may include: a processor 1410 (such as a central processing unit (CPU)) and a memory 1420; the memory 1420 is coupled to the processor 1410. The memory 1420 may store various data; moreover, also stores a program 1430 for information processing, and executes the program 1430 under the control of the processor 1410.

For example, the processor 1410 may be configured to execute a program to implement the method for configuring reference signal resource as described in the embodiments of the second aspect. For example, the processor 1410 may be configured to perform the following control: transmitting a first resource configuration, the first resource configuration at least including a first parameter, the first parameter being used for configuring a first reference signal resource with M ports; transmitting a second resource configuration and/or a channel state information (CSI) report configuration; wherein the first resource configuration or the second resource configuration or the channel state information (CSI) report configuration is at least further used for a terminal equipment to determine a second reference signal resource with N ports; where, N is less than M.

In addition, as shown in FIG. 14, the network device 1400 may further include: a transceiver 1440 and an antenna 1450, etc.; wherein the functions of said components are similar to relevant arts, which are not repeated here. It's worth noting that the network device 1400 does not have to include all the components shown in FIG. 14. Moreover, the network device 1400 may further include components not shown in FIG. 14, relevant arts may be referred to.

Embodiments of the present disclosure further provide a terminal equipment, but the present disclosure is not limited to this, it may also be other device.

FIG. 15 is a schematic diagram of a terminal equipment in the embodiments of the present disclosure. As shown in FIG. 15, the terminal equipment 1500 may include a processor 1510 and a memory 1520; the memory 1520 stores data and programs, and is coupled to the processor 1510. It's worth noting that this figure is exemplary; other types of structures can also be used to supplement or replace this structure, so as to realize a telecommunication function or other functions.

For example, the processor 1510 may be configured to execute a program to implement the method for configuring reference signal resource as described in the embodiments of the first aspect. For example, the processor 1510 may be configured to perform the following control: receiving a first resource configuration, the first resource configuration at least including a first parameter, the first parameter being used for configuring a first reference signal resource with M ports; receiving a second resource configuration and/or a channel state information (CSI) report configuration; wherein the first resource configuration or the second resource configuration or the channel state information (CSI) report configuration is at least further used for a terminal equipment to determine a second reference signal resource with N ports; where, N is less than M.

As shown in FIG. 15, the terminal equipment 1500 may further include: a communication module 1530, an input unit 1540, a display 1550 and a power source 1560. The functions of said components are similar to relevant arts, which are not repeated here. It's worth noting that the terminal equipment 1500 does not have to include all the components shown in FIG. 15, said components are not indispensable. Moreover, the terminal equipment 1500 may further include components not shown in FIG. 15, relevant arts may be referred to.

Embodiments of the present disclosure further provide a computer program, wherein when a terminal equipment executes the program, the program enables the terminal equipment to execute the method for configuring reference signal resource described in the embodiments of the first aspect.

Embodiments of the present disclosure further provide a storage medium in which a computer program is stored, wherein the computer program enables a terminal equipment to execute the method for configuring reference signal resource described in the embodiments of the first aspect.

Embodiments of the present disclosure further provide a computer program, wherein when a network device executes the program, the program enables the network device to execute the method for configuring reference signal resource described in the embodiments of the second aspect.

Embodiments of the present disclosure further provide a storage medium in which a computer program is stored, wherein the computer program enables a network device to execute the method for configuring reference signal resource described in the embodiments of the second aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the principle of the present disclosure, these variations and modifications are also within the scope of the present disclosure.

As for the implementations including the above embodiments, the following supplements are further disclosed:
1. A method for configuring reference signal resource, including:
   a terminal equipment receives a first resource configuration, the first resource configuration at least including a first parameter, the first parameter being used for configuring a first reference signal resource with M ports,
   the terminal equipment receives a second resource configuration and/or a channel state information (CSI) report configuration;
   wherein the first resource configuration or the second resource configuration or the channel state information (CSI) report configuration is at least further used for the terminal equipment to determine a second reference signal resource with N ports; where, N is less than M.
2. The method according to Supplement 1, wherein the first reference signal resource and/or the second reference signal resource are at least time-domain resources and/or frequency-domain resources and/or spatial-domain resources for transmitting or receiving reference signals, and the second reference signal resource with the N ports are a part of the first reference signal resource with the M ports.
3. The method according to Supplement 1, wherein a first parameter for configuring the first reference signal resource with the M ports at least includes one of the following parameters:
   the number M (nrofPort) of ports,
   a parameter for determining a position of a time-domain resource, and
   a parameter for determining a position of a frequency-domain resource.
4. The method according to Supplement 3, wherein,
   the parameter (firstOFDMSymbolInTimeDomain) for determining a position of a time-domain resource is time-domain position information of a first OFDM symbol contained in the first reference signal resource, and
   the parameter (frequencyDomainAllocation) for determining a position of a frequency-domain resource is frequency-domain allocation information of the first reference signal resource.
5. The method according to any one of Supplements 1 to 4, wherein the method further includes:
   the terminal equipment determines the first reference signal resource with the M ports according to the first parameter; and
   the terminal equipment determines the second reference signal resource with the N ports according to the first parameter and a second parameter, wherein the second parameter is contained in the first resource configuration and/or the CSI report configuration.
6. The method according to Supplement 5, wherein the second parameter is used to indicate that N ports in the M ports of the first reference signal resource are the second reference signal resource;
   or, the second parameter indicates or enables the resources corresponding to some ports in the first reference signal resource with the M ports as the second reference signal resource with the N ports.
7. The method according to Supplement 6, wherein the second parameter is X bits, the X bits being used to denote N continuous or discontinuous ports in the M ports.
8. The method according to Supplement 7, wherein X is equal to M,
   the second parameter is M bits, one of the M bits corresponds to a port in the M ports, and the bit indicates whether time-frequency resources of a corresponding port belong to the second reference signal resource with the N ports.
9. The method according to Supplement 7, wherein X is less than M, and the first reference signal resource with the M ports include X port groups; and
   the second parameter is X bits, one of the X bits corresponds to one of the X port groups, and the bit indicates whether time-frequency resources of a corresponding port group belong to the second reference signal resource with the N ports.
10. The method according to Supplement 9, wherein the port group is a CDM group, or is a predefined or preconfigured port group.
11. The method according to Supplement 7, wherein a list with a length being L is predefined or preconfigured, each row in the list denotes a value of the N ports in the M ports, and
   the X bits are used to indicate an index of the list; where, X=log2 (L).
12. The method according to Supplement 6, wherein the second parameter is an SLIV parameter, the SLIV parameter being used to denote N continuous ports in the M ports.
13. The method according to Supplement 12, wherein the second parameter is used to represent a starting port index and a port length of the continuous N ports.
14. The method according to Supplement 12, wherein the second parameter is used to represent a starting port group index and a port group length of the continuous N ports.
15. The method according to Supplement 14, wherein the port group is a CDM group, or is a predefined or preconfigured port group.
16. The method according to Supplement 6, wherein the second parameter is a value, the value indicating that a part of resources in the first reference signal resource with the M ports are the second reference signal resource with the N ports.
17. The method according to Supplement 6, wherein the second parameter is a numerical value or a proportional value, the numerical value or the proportional value indicating that a part of resources in the first reference signal resource with the M ports are the second reference signal resource with the N ports.
18. The method according to any one of Supplements 1 to 4, wherein the method further includes:
   the terminal equipment determines the first reference signal resource with the M ports according to the first parameter; and
   the terminal equipment determines the second reference signal resource with the N ports according to the first parameter and a third parameter, wherein the third parameter is included in the second resource configuration.
19. The method according to Supplement 18, wherein the third parameter includes CSI-RS resource configuration index information including the second parameter and/or reference resources.
20. The method according to any one of Supplements 1 to 4, wherein the method further includes:
   the terminal equipment determines the first reference signal resource with the M ports according to the first parameter; and
   the terminal equipment determines the second reference signal resource with the N ports according to the first parameter and a fourth parameter, the fourth parameter being included in the second resource configuration.
21. The method according to Supplement 20, wherein that the fourth parameter is used to indicate time-frequency positions of the second reference signal resource with the N ports at least includes:
   a parameter (firstOFDMSymbolInTimeDomain) for determining a time-domain position of a first OFDM symbol,
   a parameter (secondOFDMSymbolInTimeDomain) for determining a time-domain position of a second OFDM symbol; and
   a parameter (frequencyDomainAllocation) for determining a frequency-domain resource position.
22. The method according to any one of Supplements 1 to 21, wherein the first resource configuration, the second resource configuration or the channel state information (CSI) report configuration is carried by radio resource control (RRC) signaling and/or a media access control (MAC) control element (CE).
23. The method according to any one of Supplements 1 to 22, wherein the second reference signal resource with the N ports are configured via UE-specific signaling, or are configured via cell-specific signaling, or are configured via group-specific signaling.
24. The method according to any one of Supplements 1 to 23, wherein the method further includes:
   the terminal equipment receives first information and/or second information; and
   determines use of the first reference signal resource with the M ports and/or the second reference signal resource with the N ports to perform channel state information (CSI) measurement according to the first information and/or the second information.
25. The method according to Supplement 24, wherein the first information is carried by downlink control information (DCI) and/or a media access control (MAC) control element (CE); and
   the second information is carried by radio resource control (RRC) signaling and/or a media access control (MAC) control element (CE).
26. The method according to Supplement 24, wherein the first information is used to indicate at least one of the following: a network state, that a terminal equipment performs channel state information (CSI) measurement, that the terminal equipment performs channel state information (CSI) measurement by using the first reference signal resource with the M ports, that the terminal equipment performs channel state information (CSI) measurement by using the second reference signal resource with N ports, update/adjustment/switching of a CSI-RS resource configuration, update/adjustment/switching of a CSI report configuration, CSI-RS port adjustment, CSI-RS port activation/deactivation indication, CSI-RS port enable indication, CSI measurement adjustment, an indication related to discontinuous reception, or an indication related to discontinuous transmission; and
   the second information is used to indicate at least one of the following: a timer/counter related to a network state, a discontinuous reception period configuration related to the network state, or a discontinuous transmission period configuration related to the network state.
27. The method according to Supplement 26, wherein the network state indicates at least one of the following: a first mode, a second mode, switching from the first mode to the second mode, switching from the second mode to the first mode, time-domain element adjustment, spatial-domain element adjustment, or energy-domain element adjustment.
28. The method according to Supplement 27, wherein the first mode is at least one of the following: an energy-saving mode, a power-saving mode, a dormant mode, an abnormal mode, an inactive mode, a mode after a network device adjusts CSI-RS ports, or a first way of configuring CSI-RS ports; and the second mode is at least one of the following: a non-energy-saving mode, a non-power-saving mode, a non-dormant mode, a normal mode, an active mode, a mode before a network device adjusts CSI-RS ports, or a second way of configuring CSI-RS ports; and
   the spatial-domain element indicates at least one of the following: an antenna port, a logical port, a reference signal port, an antenna factor, an antenna element, or an antenna unit; and the energy-domain element indicates at least one of the following: energy per resource element of a physical downlink shared channel (PDSCH), or energy per resource element of a channel state information reference signal.
29. A method for configuring reference signal resource, including:
   a network device transmits a first resource configuration, the first resource configuration at least including a first parameter, the first parameter being used for configuring a first reference signal resource with M ports,
   the network device transmits a second resource configuration and/or a channel state information (CSI) report configuration;
   wherein the first resource configuration or the second resource configuration or the channel state information (CSI) report configuration is at least further used for a terminal equipment to determine a second reference signal resource with N ports; where, N is less than M.
30. The method according to Supplement 29, wherein the first reference signal resource and/or the second reference signal resource are at least time-domain resources and/or frequency-domain resources and/or spatial-domain resources for transmitting or receiving reference signals, and the second reference signal resource with the N ports are a part of the first reference signal resource with the M ports.
31. The method according to Supplement 29 or 30, wherein the second reference signal resources of the N ports are configured via UE-specific signaling, or are configured via cell-specific signaling, or are configured via group-specific signaling.
32. The method according to Supplement 29, wherein the method further includes:
   the network device transmits first information and/or second information;
   wherein the first information and/or the second information is/are used by the terminal equipment to determine the first reference signal resource with the M ports and/or the second reference signal resource with the N ports.
33. The method according to Supplement 32, wherein the first information is carried by downlink control information (DCI) and/or a media access control (MAC) control element (CE); and
   the second information is carried by radio resource control (RRC) signaling and/or a media access control (MAC) control element (CE).
34. The method according to Supplement 33, wherein the first information is used to indicate at least one of the following: a network state, that a terminal equipment performs channel state information (CSI) measurement, that the terminal equipment performs channel state information (CSI) measurement by using the first reference signal resource with the M ports, that the terminal equipment performs channel state information (CSI) measurement by using the second reference signal resource with the N ports, update/adjustment/switching of a CSI-RS resource configuration, update/adjustment/switching of a CSI report configuration, CSI-RS port adjustment, CSI-RS port activation/deactivation indication, CSI-RS port enable indication, CSI measurement adjustment, an indication related to discontinuous reception, or an indication related to discontinuous transmission; and
   the second information is used to indicate at least one of the following: a timer/counter related to a network state, a discontinuous reception period configuration related to the network state, or a discontinuous transmission period configuration related to the network state.
35. A terminal equipment, including a memory and a processor, the memory storing a computer program, and the processor being configured to execute the computer program to implement the method for configuring reference signal resource according to any one of Supplements 1 to 28.
36. A network device, including a memory and a processor, the memory storing a computer program, and the processor being configured to execute the computer program to implement the method for configuring reference signal resource according to any one of Supplements 29 to 34.

## Claims

1. An apparatus for configuring reference signal resource, comprising:
a receiving unit configured to receive a first resource configuration, the first resource configuration at least comprising a first parameter, the first parameter being used for configuring a first reference signal resource with M ports,
the receiving unit is further configured to receiving a second resource configuration and/or a channel state information report configuration;
wherein the first resource configuration or the second resource configuration or the channel state information report configuration is at least further used for a terminal equipment to determine a second reference signal resource with N ports; where, N is less than M.

2. The apparatus according to claim 1, wherein the first reference signal resource and/or the second reference signal resource are at least time-domain resources and/or frequency-domain resources and/or spatial-domain resources for transmitting or receiving reference signals, and the second reference signal resource with the N ports are a part of the first reference signal resource with the M ports.

3. The apparatus according to claim 1, wherein the first parameter at least comprises one of the following parameters: the number of ports, a parameter for determining positions of time-domain resources, or a parameter for determining positions of frequency-domain resources,
the parameter for determining positions of time-domain resources being time-domain position information of a first OFDM symbol contained in the first reference signal resource, and the parameter for determining positions of frequency-domain resources being frequency-domain allocation information of the first reference signal resource.

4. The apparatus according to claim 1, wherein the apparatus further comprises:
a processing unit configured to determine the first reference signal resource with the M ports according to the first parameter, and determine the second reference signal resource with the N ports according to the first parameter and the second parameter, wherein the second parameter is contained in the first resource configuration and/or the channel state information report configuration.

5. The apparatus according to claim 4, wherein the second parameter is used to indicate that N ports in the M ports of the first reference signal resource are the second reference signal resource;
or, the second parameter indicates or enables resources to which a part of ports in the first reference signal resource with the M ports corresponds to be the second reference signal resource with the N ports.

6. The apparatus according to claim 5, wherein the second parameter is X bits, the X bits being used to denote N continuous or discontinuous ports in the M ports.

7. The apparatus according to claim 6, wherein X is equal to M, and the second parameter is M bits, one of the M bits corresponds to a port in the M ports, and the bit indicates whether time-frequency resources of a corresponding port belong to the second reference signal resource with the N ports.

8. The apparatus according to claim 6, wherein X is less than M, and the first reference signal resource with the M ports comprise X port groups; the second parameter is X bits, one of the X bits corresponds to one of the X port groups, and the bit indicates whether time-frequency resources of a corresponding port group belong to the second reference signal resource with the N ports; and the port group is a CDM group, or a predefined or preconfigured port group.

9. The apparatus according to claim 6, wherein a list with a length being L is predefined or preconfigured, each row in the list denotes a value of the N ports in the M ports, and the X bits are used to indicate an index of the list; where, X=log2 (L).

10. The apparatus according to claim 5, wherein the second parameter is an SLIV parameter, the SLIV parameter being used to denote N continuous ports in the M ports; and
the second parameter is used to denote a starting port index and a port length of the continuous N ports, or the second parameter is used to denote a starting port group index and a port group length of the N continuous ports, the port group being a CDM group, or a predefined or preconfigured port group.

11. The apparatus according to claim 5, wherein the second parameter is a value, the value indicating that a part of resources in the first reference signal resource with the M ports are the second reference signal resource with the N ports.

12. The apparatus according to claim 5, wherein the second parameter is a numerical value or a proportional value, the numerical value or the proportional value indicating that a part of resources in the first reference signal resource with the M ports are the second reference signal resource with the N ports.

13. The apparatus according to claim 1, wherein the apparatus further comprises:
a processing unit configured to determine the first reference signal resource with the M ports according to the first parameter, and determine the second reference signal resource with the N ports according to the first parameter, a third parameter and/or a fourth parameter, wherein the third parameter and/or the fourth parameter is/are contained in the second resource configuration.

14. The apparatus according to claim 13, wherein the third parameter comprises channel state information reference signal resource configuration index information comprising a second parameter and/or a reference resource; and
the fourth parameter at least comprises: a parameter for determining a time-domain position of a first OFDM symbol, a parameter for determining a time-domain position of a second OFDM symbol, and a parameter for determining a position of a frequency-domain resource.

15. The apparatus according to claim 1, wherein the first resource configuration or the second resource configuration or the channel state information report configuration is carried by radio resource control signaling and/or a media access control control element.

16. The apparatus according to claim 1, wherein the receiving unit is further configured to receive first information and/or second information, and determines to perform channel state information measurement according to the first information and/or the second information by using the first reference signal resource with the M ports and/or the second reference signal resource with the N ports.

17. The apparatus according to claim 16, wherein the first information is carried by downlink control information and/or a media access control control element, and the second information is carried by radio resource control signaling and/or a media access control control element.

18. The apparatus according to claim 16, wherein the first information is used to indicate at least one of the following: a network state, that a terminal equipment performs channel state information measurement, that the terminal equipment performs channel state information measurement by using the first reference signal resource with the M ports, that the terminal equipment performs channel state information measurement by using the second reference signal resource with the N ports, update/adjustment/switching of a channel state information reference signal resource configuration, update/adjustment/switching of a channel state information report configuration, channel state information reference signal port adjustment, channel state information reference signal port activation/deactivation indication, channel state information reference signal port enable indication, channel state information measurement adjustment, an indication related to discontinuous reception, or an indication related to discontinuous transmission; and
the second information is used to indicate at least one of the following: a timer/counter related to a network state, a discontinuous reception period configuration related to the network state, or a discontinuous transmission period configuration related to the network state.

19. An apparatus for configuring reference signal resource, comprising:
a transmitting unit configured to transmit a first resource configuration, the first resource configuration at least comprising a first parameter, the first parameter being used for configuring a first reference signal resource with M ports,
the transmitting unit further transmitting a second resource configuration and/or a channel state information report configuration;
wherein the first resource configuration or the second resource configuration or the channel state information report configuration is at least further used for a terminal equipment to determine a second reference signal resource with N ports; where, N is less than M.

20. A communication system, comprising:
a network device configured to transmit a first resource configuration, the first resource configuration at least comprising a first parameter, the first parameter being used for configuring a first reference signal resource with M ports, and transmit a second resource configuration and/or a channel state information report configuration; and
a terminal equipment configured to receive the first resource configuration, the second resource configuration and/or a channel state information report configuration; wherein the first resource configuration or the second resource configuration or the channel state information report configuration is at least further used for the terminal equipment to determine a second reference signal resource with N ports; where, N is less than M.
